# FASCICULE DE BREVET EUROPEEN

(11) **EP 1 267 530 B1**
(45) Date de publication et mention de la délivrance du brevet: **29.09.2004**
(21) Numéro de dépôt: 02291318.0
(22) Date de dépôt: 30.05.2002
(51) Int. Cl.: H04L 12/56, H04Q 7/22

(54) **Procédé de transmission de paquets IP à travers un système cellulaire de radiocommunication, et equipements du système cellulaire pour la mise en oeuvre de ce procédé**
Verfahren zur Übertragung von IP-Paketen über ein zellulares Mobilfunksystem, und Einrichtungen des zellularen Systems zur Durchführung dieses Verfahrens
Method for transmitting IP packets over a cellular radio communications system, and equipment of the cellular system for performing such method

(30) Priorité: 01.06.2001 FR 0107254
(43) Date de publication de la demande: 18.12.2002
(73) Titulaire: Nortel Networks Limited, St. Laurent, Quebec H4S 2A9 (CA)
(72) Inventeur: Lucidarme, Thierry, 78180 Montigny le Bretonneux (FR); Lescuyer, Pierre, 78180 Montigny Le Bretonneux (FR)
(74) Mandataire: Loisel, Bertrand

(56) Documents cités:
- EP-A- 1 035 688
- WO-A-99/05828
- PRIGGOURIS G ET AL: "SUPPORTING IP QOS IN THE GENERAL PACKET RADIO SERVICE" IEEE NETWORK, vol. 14, no. 5, septembre 2000 (2000-09) - octobre 2000 (2000-10), pages 8-17, XP002192192
- KOODLI R ET AL: "SUPPORTING PACKET-DATA QOS IN NEXT-GENERATION CELLULAR NETWORKS" IEEE COMMUNICATIONS MAGAZINE, vol. 39, no. 2, février 2001 (2001-02), pages 180-188, XP001006751 ISSN: 0163-6804
- MIKKONEN J ET AL: "AN INTEGRATED QOS ARCHITECTURE FOR GSM NETWORKS" PROCEEDINGS OF THE IEEE 1998 INTERNATIONAL CONFERENCE ON UNIVERSAL PERSONAL COMMUNICATIONS (ICUPC '98), FLORENCE, ITALY, vol. 1, 5 - 9 octobre 1998, pages 403-407, XP010314888 ISBN: 0-7803-5106-1
- TERZIS A ET AL: "RSVP OPERATION OVER IP TUNNELS" IETF RFC 2746, janvier 2000 (2000-01), XP002139061

## Description

La présente invention concerne les techniques de signalisation visant à procurer une certaine qualité de service (QoS, «Quality of Service») des réseaux de transmission de paquets tels que l'Internet. L'invention concerne en particulier les réseaux fonctionnant selon le protocole IP («Internet Protocol», voir «Request For Comments» (RFC) 791 publiée en septembre 1981 par l'Internet Engineering Task Force (IETF)).

On sait que les réseaux IP acheminent les données sous forme de paquets ou datagrammes selon un mécanisme dit de meilleur effort («best effort»).

Plusieurs enrichissements du protocole IP dans la couche réseau du modèle OSI ont été proposés afin de pouvoir fournir une plus grande qualité de service à certains flux d'information.

Certaines de ces techniques («Diffserv», voir RFC 2474 et 2475 publiées en décembre 1998 par l'IETF) utilisent un marquage spécifique des paquets en périphérie du réseau, notamment à l'aide du champ TOS («Type of service») de l'en-tête IP. Les routeurs internes du réseau ne différencient pas les flux en termes de qualité de service, mais seulement les classes de paquets définies par les marquages.

L'invention se rapporte plutôt aux techniques («Intserv», voir RFC 1633 publiée en juin 1994 par l'IETF) qui opèrent des réservations de ressources au niveau des routeurs sur la base des flux traités qui peuvent être identifiés par les adresses IP source et destination, et des numéros de ports du protocole de couche transport. L'invention vise plus spécifiquement celles de ces techniques qui opèrent des réservations dynamiques de ressources. L'exemple le plus courant en est le protocole RSVP («Resource reSerVation Protocol», voir RFC 2205 publiée en septembre 1997 par l'IETF).

Les ressources faisant l'objet de telles réservations dynamiques dépendent des implémentations spécifiques du protocole. Elles peuvent correspondre par exemple à des portions de bande passante, ou encore à des portions de mémoires tampons de paquets.

La réservation de telles ressources nécessite des procédures de signalisation pour établir et maintenir des états dans les routeurs rencontrés le long du chemin des paquets dans le réseau. Ces procédures comportent la transmission de datagrammes spécifiques le long du chemin. Le routage des paquets intervient ensuite en tenant compte des états ainsi établis et maintenus.

La RFC 2746, «RSVP Operation over IP Tunnels», publiée en janvier 2000 par l'IETF décrit comment mettre en oeuvre RSVP dans des tunnels IP portant du trafic IP (voir aussi EP-A-1 035 688). Ce trafic IP est sous forme de datagrammes d'une couche IP interne, ou couche IP applicative. Le «tunnel» est formé entre deux routeurs de cette couche externe, où ces datagrammes sont encapsulés dans des datagrammes d'une couche IP externe, ou couche IP de transport, mettant en communication ces deux routeurs (cette couche externe est vue comme appartenant au niveau 2 du modèle OSI depuis la couche interne). Les documents ci-dessus décrivent comment associer des sessions RSVP de la couche interne à des sessions RSVP de la couche externe en réponse à la détection de datagrammes de signalisation de la couche externe par les routeurs d'extrémité du tunnel.

Le mécanisme de la RFC 2746 repose sur une observation des datagrammes de la couche interne aux deux extrémités du tunnel et sur des échanges d'information spécifiques entre les routeurs situés à ces extrémités. Il est inapplicable lorsque l'une des extrémités du tunnel n'est pas capable d'analyser l'en-tête des datagrammes IP de la couche interne.

Or il existe des architectures de réseaux qui utilisent des tunnels IP pour transporter du trafic IP sans que les extrémités de ces tunnels aient systématiquement la faculté d'analyser le trafic IP. Le mécanisme précité est alors mis en défaut.

Ce cas de figure se rencontre notamment dans des architectures de réseaux cellulaires de radiocommunication permettant un accès sans fil aux réseaux de paquets, notamment de type IP (Intranet ou Internet). Certains réseaux cellulaires de seconde génération (GSM, «Global system for Mobile communications») comportent maintenant un service de transmission de paquets appelé GPRS («General Packet Radio Service»). Les systèmes cellulaires de troisième génération, notamment l'UMTS («Universal Mobile Telecommunications System»), sont conçus dans l'optique du multimédia, et incorporent donc de tels services de transmission de paquets.

Ces systèmes cellulaires comportent d'une part un coeur de réseau («core network») qui assure les fonctions de communication et de gestion des utilisateurs, et d'autre part un ou plusieurs réseaux d'accès radio qui fournissent les liaisons entre l'infrastructure et les terminaux radio.

Dans les systèmes précités (GPRS, UMTS), le coeur du réseau est basé sur la technologie IP. Il en résulte que lorsqu'un terminal échange des données sous forme de datagrammes IP, ces données font l'objet d'une double encapsulation IP dans le coeur du réseau. Une couche IP interne met en communication le terminal radio avec le réseau de paquets (Internet ou Intranet). Un commutateur de coeur de réseau, appelé GGSN («Gateway GPRS support Node») constitue le routeur de périphérie du réseau de paquets avec lequel le terminal échange ses datagrammes IP en un seul bond de la couche IP interne. Dans le coeur de réseau, ces datagrammes IP sont incorporés à des unités de données d'un protocole tunnel GTP («GPRS Tunnelling Protocol», voir spécification technique 3GPP TS 29.060, version 3.8.0 publiée en mars 2001 par le 3GPP (3^{rd} Generation Partnership Project)), elles-mêmes encapsulées dans des datagrammes d'une couche IP externe mettant en communication le GGSN avec le commutateur de desserte du terminal appelé SGSN («Serving GPRS Support Node»).

Le tunnel IP/GTP/IP s'étend du GGSN au SGSN. L'une de ses extrémités (le SGSN) ne possède pas les fonctionnalités d'un routeur de la couche IP interne. Notamment il ne possède pas la capacité du GGSN d'analyser l'en-tête et éventuellement une partie des données des datagrammes de la couche IP interne.

Dans un scénario typique, un service «Intserv» tel que RSVP est fourni entre un terminal et un autre terminal ou serveur distant relié au réseau de paquets (Internet ou Intranet). Les datagrammes de signalisation sont ainsi traités par les routeurs de la couche IP interne qui peuvent réserver les ressources requises si elles sont disponibles. Un maillon faible de cette chaîne peut être la couche IP externe entre le GGSN et le SGSN, qui applique généralement un mécanisme de «best effort».

Comme le SGSN ne comporte pas cette fonctionnalité d'analyse de l'en-tête des datagrammes IP de la couche IP interne, le mécanisme de la RFC 2746 n'est pas applicable dans le tunnel.

Procurer aux SGSN une capacité d'analyse des champs de données («payload») des datagrammes de la couche IP externe à la seule fin d'y détecter d'éventuels paquets de signalisation RSVP de la couche IP interne serait une solution très complexe et coûteuse, étant noté que ces paquets RSVP ne représente qu'une fraction très faible du trafic total.

Par conséquent, le mécanisme de relais de signalisation RSVP proposés par la RFC 2746 et EP-A-1 035 688 ne peuvent être appliqués aux réseaux cellulaires. Ainsi, le trafic existant dans le coeur de réseau, y compris le trafic qui se contente largement du service «best effort», peut contrarier la fourniture de la qualité de service requise pour un flux RSVP. Ceci diminue la capacité de l'opérateur cellulaire à offrir à ses clients des services «Intserv» à réservation dynamique.

Dans "Supporting IP QoS in the General Packet Radio Service", (IEEE Network, septembre/octobre 2000, pp. 8-17), G. Priggouris et al. décrivent une adaptation d'un réseau GPRS pour la fourniture de services de type Diffserv et IntServ. Selon cet article, le GGSN répond à la réception d'un paquet PATH du protocole RSVP dans la couche IP interne en adressant au SGSN un message d'initialisation d'une autre session RSVP dans la couche IP externe. Un tel fonctionnement requiert une mise en oeuvre non standard de RSVP dans la couche externe, qui complique la conception notamment du SGSN. Il conduit en outre, de façon sous-optimale, à déclencher des opérations visant à l'établissement d'un tunnel alors qu'il se peut que la réservation échoue dans la couche interne.

Le document «Supporting Packet-Data QoS in Next-Generation Cellular Networks», de R. Koodli et al. (IEEE Communications Magazine, February 2001) évoque une mise en oeuvre cohérente de services de type «Diffserv» aux interfaces lu et Gn d'un réseau UMTS, en associant aux services des classes de trafic UMTS différentes.

Un but de la présente invention est de proposer un mécanisme de mise en oeuvre simple et efficace, permettant à un opérateur cellulaire d'offrir des services RSVP à ses clients.

La présente invention concerne un procédé de transmission de paquets selon un premier réseau IP à travers un système cellulaire de radiocommunication ayant des équipements reliés entre eux par l'intermédiaire d'un second réseau IP. Ces équipements comportent au moins un routeur-passerelle ayant une première interface pour échanger des premiers paquets selon le premier réseau IP et une seconde interface pour échanger des seconds paquets selon le second réseau IP. Ces équipements comprennent aussi au moins un noeud de commutation ayant une première interface avec un réseau d'accès radio procurant des liaisons avec des terminaux radio et une seconde interface pour échanger des seconds paquets selon le second réseau IP. Certains au moins des terminaux radio comportent des moyens de communication selon le premier réseau IP à travers le système cellulaire, le routeur-passerelle constituant, dans le premier réseau IP, un routeur de périphérie qui échange des premiers paquets avec lesdits terminaux en un seul bond du premier réseau IP. Chacun de ces premiers paquets échangés est encapsulé dans au moins une unité de données d'un protocole tunnel mis en oeuvre entre les secondes interfaces d'un routeur-passerelle et d'un noeud de commutation, ladite unité de données incluant une identité de tunnel et étant elle-même encapsulée dans au moins un second paquet. Le procédé de transmission comprend les étapes suivantes :
- détecter des premiers paquets de signalisation portant des messages RESV du protocole RSVP concernant une première session du protocole RSVP dans le premier réseau IP relative à un flux applicatif de premiers paquets entre un terminal radio et une unité distante reliée au premier réseau IP ;
- en réponse à la détection de certains au moins des premiers paquets de signalisation, associer une seconde session du protocole RSVP dans le second réseau IP à une identité de tunnel incluse dans les unités de données dans lesquelles sont encapsulés les premiers paquets du flux applicatif, ladite seconde session étant relative à un flux de seconds paquets dans lesquels lesdites unités de données sont encapsulées entre un routeur-passerelle et un noeud de commutation ; et
- transmettre des seconds paquets de signalisation dans le second réseau IP pour établir et/ou mettre à jour des paramètres de la seconde session associée à ladite identité de tunnel.

Pour réaliser une réservation cohérente de ressources entre les deux réseaux IP, la seconde session RSVP mise en oeuvre dans le second réseau IP est avantageusement déterminée en fonction des caractéristiques de la première session RSVP mise en oeuvre dans le premier réseau IP. Pour ce faire, l'association de la seconde session RSVP à ladite identité de tunnel comprend l'affectation à la seconde session RSVP de paramètres de qualité de service sélectionnés en fonction de paramètres de qualité de service affectés à la première session et obtenus à partir des premiers paquets de signalisation détectés.

Selon le mode de fonctionnement connu du protocole RSVP, une session de ce protocole est initialisée dans le premier réseau IP par un paquet de signalisation formant un message PATH émis par la source du flux applicatif en direction de l'unité distante destinataire. En réponse, cette unité distante retourne vers la source un paquet de signalisation formant un message RESV. Ce message RESV notifie la disponibilité de ressources suffisantes dans chacun des éléments de transmission situés sur le chemin entre l'unité destinataire et le routeur qui le traite par rapport à la qualité de service demandée par le message PATH. Il est propagé jusqu'à la source qui commence à transmettre les paquets du flux si les ressources adéquates ont pu être réservées tout au long du chemin.

L'étape de détection des premiers paquets de signalisation est de préférence exécutée au niveau de la première interface du routeur-passerelle.

Le flux applicatif de premiers paquets peut être un flux descendant, depuis l'unité distante reliée au premier réseau IP vers un terminal radio, ou un flux montant, depuis un terminal radio vers l'unité distante reliée au premier réseau IP.

Dans le cas d'un flux applicatif descendant, en réponse à la détection du message RESV, le routeur-passerelle associe la seconde session RSVP à l'identité de tunnel incluse dans les unités de données dans lesquelles sont encapsulés les premiers paquets du flux applicatif. Le routeur-passerelle émet alors un paquet de signalisation portant un message PATH du protocole RSVP sur le second réseau IP à destination du noeud de commutation. Une réservation dynamique de ressources, entre le routeur-passerelle et le noeud de commutation, est alors opérée dans le second réseau IP, indépendamment du premier réseau IP, en suivant la procédure standard de protocole RSVP.

Dans le cas d'un flux applicatif montant, l'émission du message PATH du protocole RSVP dans le second réseau IP est effectuée par le noeud de commutation en direction du routeur-passerelle. Pour cela, en réponse à la détection de certains au moins des premiers paquets de signalisation au niveau de la première interface du routeur-passerelle, ce routeur-passerelle transmet d'abord au noeud de commutation, par l'intermédiaire du second réseau IP, un message de contrôle. Ce message de contrôle relève d'un plan de contrôle du protocole tunnel et désigne l'identité de tunnel incluse dans les unités de données dans lesquelles sont encapsulés les premiers paquets du flux applicatif. Ce message de contrôle contient aussi certains au moins des paramètres de qualité de service de la première session RSVP.

En réponse à la détection de ce message de contrôle, le noeud de commutation associe alors la seconde session RSVP interne au second réseau IP à l'identité de tunnel désignée dans ce message de contrôle. Il émet alors, sur le second réseau IP, à destination du routeur-passerelle, un paquet de signalisation portant un message PATH correspondant à cette seconde session de protocole RSVP. La réservation dynamique de ressources IP, entre le noeud de commutation et le routeur-passerelle, est alors opérée dans le second réseau, indépendamment du premier réseau IP, selon la procédure standard de protocole RSVP.

Ainsi, selon l'invention, dans les deux cas d'un flux applicatif descendant ou montant, la réservation de ressources dans le premier réseau IP donne lieu à une réservation de ressources dans le second réseau IP. Si cette réservation échoue, la transmission suivant le second réseau IP pourra être en mode « best effort ». Une session globale homogène de réservation de ressources est par conséquent établie sur les deux réseaux IP.

Dans certains systèmes cellulaires, d'autres éléments de transmission du réseau d'accès radio sont aussi reliés aux noeuds de commutation précédents par un autre réseau IP. Ces autres éléments de transmission sont notamment des organes de contrôle pourvus d'interfaces de réseau communiquant avec la première interface d'accès d'au moins un noeud de commutation par l'intermédiaire d'un troisième réseau IP. Une partie au moins du protocole tunnel existant entre le routeur-passerelle et le noeud de commutation est mise en oeuvre entre les interfaces de réseau desdits organes de contrôle et la première interface d'accès du noeud de commutation.

De préférence, le procédé de transmission de paquets selon l'invention comprend alors, en réponse à l'association à une identité de tunnel d'une seconde session RSVP relative à un flux de seconds paquets dans lesquels des unités de données du protocole tunnel sont encapsulées entre un routeur-passerelle et un noeud de commutation, l'association à ladite identité de tunnel d'une troisième session RSVP dans le troisième réseau IP, pour transporter entre le noeud de commutation et un organe de contrôle du réseau d'accès radio des paquets IP dans lesquels lesdites unités de données sont encapsulées.

Pour un flux applicatif descendant, le noeud de commutation associe à ladite identité de tunnel une troisième session RSVP. Des troisièmes paquets de signalisation sont alors échangés dans le troisième réseau IP pour établir et/ou mettre à jour des paramètres de cette troisième session RSVP. Le noeud de commutation émet alors, sur le troisième réseau IP, un message PATH correspondant à cette troisième session RSVP. La réservation dynamique de ressources IP, entre l'organe de contrôle et le noeud de commutation, est alors opérée dans le troisième réseau, indépendamment des premier et second réseaux, selon la procédure RSVP standard.

Pour un flux applicatif montant, l'association à ladite identité de tunnel d'une troisième session RSVP est effectuée par l'organe de contrôle. Pour cela, en réponse à la réception par le noeud de commutation du premier message de contrôle émis par le routeur-passerelle, le noeud de commutation transmet, en direction de l'organe de contrôle, un second message de contrôle désignant l'identité du tunnel incluse dans les unités de données dans lesquelles sont encapsulés les premiers paquets du flux applicatif. Ce second message de contrôle reprend au moins une partie des données contenues dans le premier message de contrôle. Par ailleurs, il relève d'un protocole de communication spécifique entre le noeud de commutation et l'organe de contrôle.

La troisième session RSVP dans le troisième réseau IP est alors initialisée par l'organe de contrôle en émettant un message PATH à destination du noeud de commutation.

Un autre aspect de la présente invention se rapporte à un système cellulaire de radiocommunication comprenant des équipements de réseau agencés pour mettre en oeuvre un procédé tel que défini ci-dessus, ainsi que certains de ces équipements.

L'invention vise ainsi un routeur-passerelle ayant une première interface pour échanger des premiers paquets selon un premier réseau IP et une seconde interface pour échanger des seconds paquets selon un second réseau IP, et constituant un routeur de périphérie du premier réseau IP, agencé pour échanger des premiers paquets avec des terminaux radio en un seul bond du premier réseau IP. Chacun de ces premiers paquets échangés est encapsulé dans au moins une unité de données d'un protocole tunnel mis en oeuvre entre ladite seconde interface et un noeud de commutation, ladite unité de données incluant une identité de tunnel et étant elle-même encapsulée dans au moins un second paquet échangé selon le second réseau IP. Ce routeur-passerelle selon l'invention comprend :
- des moyens pour détecter sur la première interface des premiers paquets de signalisation portant des messages RESV du protocole RSVP concernant une première session RSVP dans le premier réseau IP relative à un flux applicatif de premiers paquets entre un terminal radio et une unité distante reliée au premier réseau IP ;
- des moyens pour, en réponse à la détection de certains au moins des premiers paquets de signalisation, associer une seconde session RSVP dans le second réseau IP à une identité de tunnel incluse dans les unités de données dans lesquelles sont encapsulés les premiers paquets du flux applicatif, ladite seconde session RSVP étant relative à un flux de seconds paquets dans lesquels lesdites unités de données sont encapsulées entre ladite seconde interface et un noeud de commutation ;
- des moyens pour transmettre des seconds paquets de signalisation dans le second réseau IP pour établir et/ou mettre à jour des paramètres de la seconde session RSVP associée à ladite identité de tunnel.

Selon un autre aspect, l'invention concerne un noeud de commutation de coeur de réseau de système cellulaire de radiocommunication, comprenant une première interface avec un réseau d'accès radio procurant des liaisons avec des terminaux radio et une seconde interface pour échanger des paquets selon un réseau IP avec au moins un routeur-passerelle, lesdits paquets portant des unités de données d'un protocole tunnel supporté par la seconde interface, chaque unité de données incluant une identité de tunnel et des données constituant soit un message de contrôle si l'unité de données relève d'un plan de contrôle du protocole tunnel, soit des données d'utilisateur si l'unité de données relève d'un plan d'utilisateur du protocole tunnel. Ce noeud de commutation comprend aussi des moyens pour, en réponse à la réception depuis un routeur-passerelle d'une unité de données spécifique du protocole tunnel relevant du plan de contrôle, associer une session RSVP dans ledit réseau IP à une identité de tunnel désignée dans le message de contrôle de ladite unité de données spécifique et transmettre audit routeur-passerelle au moins un paquet de signalisation dans le réseau IP pour établir et/ou mettre à jour des paramètres de la session RSVP associée à l'identité de tunnel désignée dans le message de contrôle, ladite session RSVP étant relative à un flux de paquets dans lequel sont encapsulées des unités de données du protocole tunnel relevant du plan d'utilisateur et comportant l'identité de tunnel désignée dans le message de contrôle.

La première interface du noeud de commutation auquel s'applique l'invention supporte aussi le protocole IP, ainsi que le plan d'utilisateur du protocole tunnel pour communiquer avec des organes de contrôle du réseau d'accès radio. Selon l'invention, le noeud de commutation comprend en outre des moyens pour, en réponse à l'association à une identité de tunnel d'une session RSVP relative à un flux de paquets dans lesquels des unités de données du protocole tunnel relevant du plan d'utilisateur et comportant une identité de tunnel sont encapsulées entre le noeud de commutation et un routeur-passerelle, associer à ladite identité de tunnel une autre session RSVP, pour transporter entre le noeud de commutation et un organe de contrôle du réseau d'accès radio des paquets IP dans lesquels lesdites unités de données sont encapsulées.

L'invention propose enfin un contrôleur de réseau radio de système cellulaire de radiocommunication, comprenant une première interface de communication avec des terminaux radio et une seconde interface pour échanger des paquets selon un réseau IP avec au moins un noeud de commutation, lesdits paquets portant des unités de données d'utilisateur d'un protocole tunnel supporté par la seconde interface, chaque unité de données d'utilisateur incluant une identité de tunnel. Ce contrôleur de réseau radio comprend en outre des moyens pour, en réponse à la réception depuis un noeud de commutation d'un message de contrôle désignant une identité de tunnel, associer une session RSVP dans ledit réseau IP à l'identité de tunnel désignée dans le message de contrôle et transmettre audit noeud de commutation au moins un paquet de signalisation dans le réseau IP pour établir et/ou mettre à jour des paramètres de la session RSVP associée à l'identité de tunnel désignée dans le message de contrôle, ladite session RSVP étant relative à un flux de paquets dans lequel sont encapsulées des unités de données du protocole tunnel comportant l'identité de tunnel désignée dans le message de contrôle.

D'autres particularités et avantages de la présente invention apparaîtront dans la description ci-après d'exemples de mise en oeuvre non limitatifs, en référence aux dessins annexés, dans lesquels :
- la figure 1 est un schéma général d'une architecture de système de communication à laquelle l'invention peut s'appliquer ;
- les figures 2 et 3 sont des schémas illustrant des piles de protocoles de communication mis en oeuvre dans des entités du système de la figure 1, dans le cas de systèmes cellulaires de seconde et de troisième génération, respectivement ;
- la figure 4 est un diagramme illustrant différents messages échangés pour gérer un flux RSVP descendant dans un procédé selon l'invention mis en oeuvre dans un réseau cellulaire de deuxième génération relié à un réseau IP ;
- la figure 5 est un diagramme semblable à celui de la figure 4 dans le cas d'un flux RSVP montant ;
- les figures 6 et 7 sont des diagrammes respectivement semblables à ceux des figures 4 et 5 dans une mise en oeuvre du procédé selon l'invention dans un réseau cellulaire de troisième génération relié à un réseau IP.

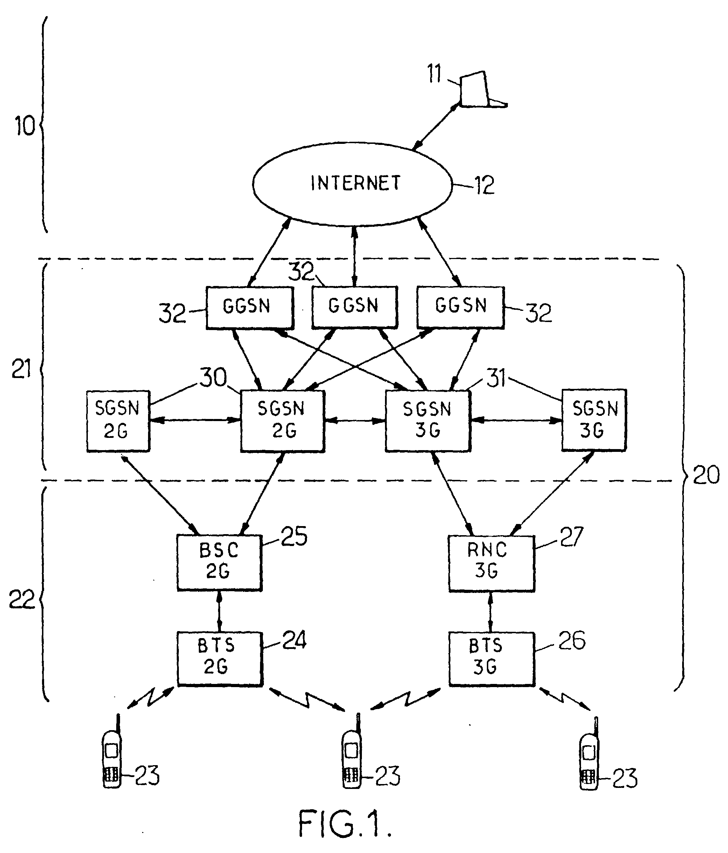

Le système de communication représenté schématiquement sur la figure 1 comporte une partie fixe 10 et un système cellulaire de communication 20. La partie fixe 10 comporte un réseau IP 12, par exemple Internet ou Intranet. Ce réseau 12 fonctionne classiquement selon le protocole IP (voir la RFC 791 de l'IETF pour la version 4, et la RFC 2460 de l'IETF pour la version 6). Des unités distantes 11 (serveurs IP ou terminaux) sont connectées au réseau IP 12.

Le système cellulaire de radiocommunication 20 est classiquement divisé en un coeur de réseau 21 («Core Network»), comprenant des commutateurs de paquets interconnectés, et un réseau d'accès 22 fournissant les liens radio avec les terminaux radio mobiles 23.

Dans l'exemple représenté, le système cellulaire de radiocommunication 20 combine des éléments de seconde génération (GSM) et des éléments de troisième génération (UMTS). Dans le GSM, le réseau d'accès 22, appelé BSS («Base Station Sub-system»), se compose de stations de base (BTS) 24 distribuées sur la zone de couverture pour communiquer par radio avec les terminaux mobiles 23, et de contrôleurs de stations de base (BSC) 25 reliés au coeur de réseau 21. Dans le cas de l'UMTS, le réseau d'accès 22, appelé RNS («Radio Network System»), se compose de stations de base (BTS) 26 et d'organes de contrôle de réseau radio (RNC) 27 reliés au coeur de réseau 21.

Les noeuds de commutation du coeur de réseau 21 sont appelés GSN («GPRS Support Node»). Les noeuds de commutation 30, 31 reliés au réseau d'accès 22 sont appelés SGSN («Serving GSN») et jouent le rôle de commutateur de desserte du terminal mobile 23. D'autres noeuds de commutation 32 du coeur de réseau 21, appelés GGSN («Gateway GSN»), sont des routeurs-passerelles connectés au réseau IP 12. Ces GGSN 32 sont reliés aux SGSN 30, 31 pour permettre aux terminaux mobiles 23 d'accéder au réseau IP 12. Sur la figure 1, on a représenté plusieurs GGSN 32, qui peuvent correspondre à des routeurs-passerelles gérés par des fournisseurs appelés ISP («Internet Service Provider») différents.

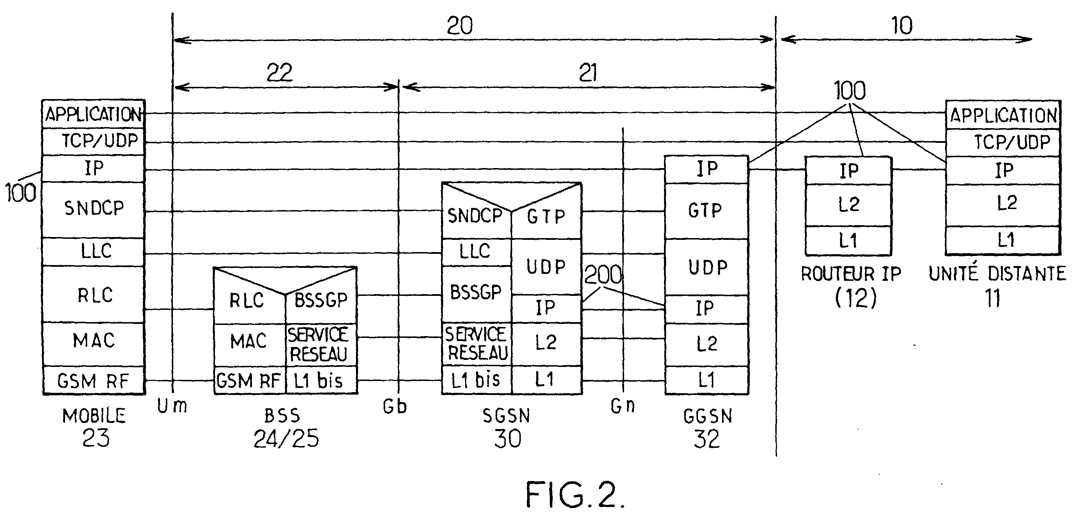

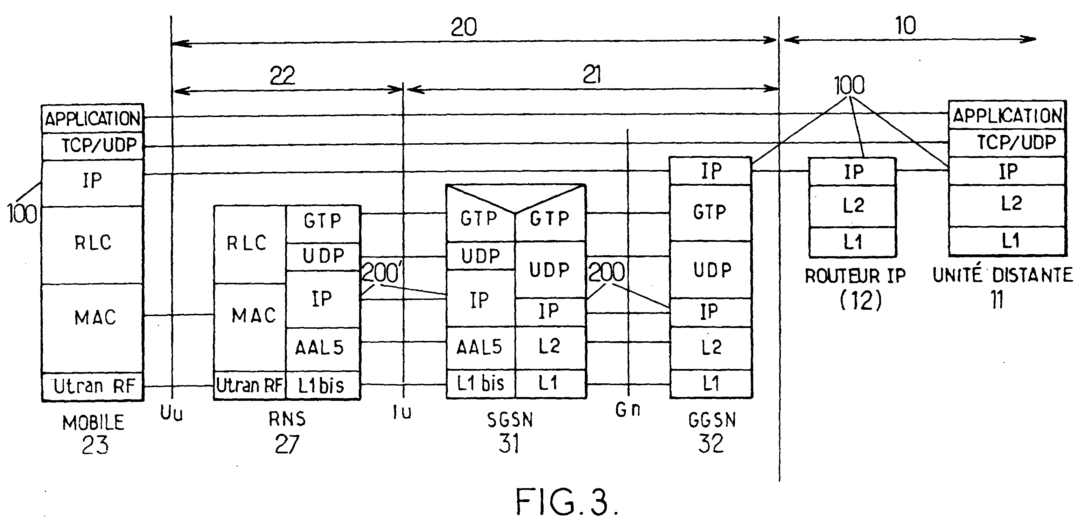

Les figures 2 et 3 sont des illustrations des protocoles pouvant être mis en oeuvre dans des communications en mode paquet entre un terminal mobile 23 et une unité distante 11. Cette unité distante 11 est accessible à travers un ou plusieurs routeurs IP appartenant au réseau IP 12. Dans les deux cas, les protocoles employés sont les mêmes dans la partie fixe 10 ainsi qu'à l'interface Gn entre le GGSN 32 et les SGSN 30, 31. Dans le réseau IP 12, au-dessus des couches 1 et 2 du modèle OSI (L1, L2), IP est utilisé comme protocole de réseau. La même couche IP 100 est présente dans les terminaux mobiles 23 lorsqu'ils accèdent au réseau IP 12. Cet accès peut se faire lors de sessions TCP («Transmission Control Protocol», RFC 793 de l'IETF), ou par échange de datagrammes UDP («User Datagram Protocol», RFC 768 de l'IETF), pour permettre aux applications exécutées dans le mobile 23 et l'unité distante 11 d'échanger des données regroupées en flux, dits flux applicatifs.

Les protocoles utilisés dans le système de radiocommunication 20 sont décrits, pour la deuxième génération (figure 2), dans les Recommandations GSM 03.60, 03.64, 08.16 et 09.61 publiées par l'ETSI («European Telecommunications Standards Institute»), et pour la troisième génération (figure 3) dans les spécifications 3G TS 25.301 et 3G TS 25.410 publiées par le 3GPP.

Au niveau de l'Interface «Gn», des couches IP 200 et UDP supplémentaires, ainsi qu'une couche du protocole GTP, sont présentes entre la couche 2 et la couche IP 100 correspondant à celle du terminal mobile 23.

Dans le réseau UMTS de troisième génération, des couches IP 200', UDP et GTP supplémentaires sont également présentes à l'interface «lu» entre le SGSN 31 et le RNC 27. Le réseau IP sur lequel est mise en oeuvre la couche IP 200' pour les échanges entre le RNC et le SGSN s'appuie sur un protocole d'adaptation AAL 5 en couche liaison. Il peut être le même réseau IP que celui servant aux échanges SGSN/GGSN, ou un réseau distinct. Dans le cas du GPRS (figure 2), le SGSN 30 communique selon d'autres protocoles avec le BSC 25 et le terminal mobile 23.

Le GGSN 32 situé à l'interface entre le coeur de réseau cellulaire 21 et le réseau IP 12 comprend donc un routeur de la couche IP 100 commune au réseau IP 12 et au terminal mobile 23. Selon cette couche IP interne 100, la transmission entre un GGSN et un terminal mobile s'effectue en un seul bond, le GGSN formant un routeur de périphérie. Les SGSN 30, 31, quant à eux, ne possèdent pas cette couche IP 100, et n'ont par conséquent pas accès aux paquets transmis entre l'unité distante 11 et le terminal mobile 23, selon le réseau IP 12 via les GGSN 32. Par contre les SGSN 30, 31 possèdent en commun avec les GGSN 32 la seconde couche IP 200, ainsi que les couches de protocole GTP et UDP.

On suppose ici que le réseau IP 12 et le réseau IP support du coeur de réseau sont tous deux équipés pour mettre en oeuvre le protocole RSVP.

Pour la transmission entre le GGSN et le SGSN, les paquets IP de la couche 100 sont encapsulés dans des unités de données du protocole GTP.

La transmission d'unités de données par le niveau de protocole GTP est réalisée par allocation d'un tunnel, dit tunnel GTP, à une communication. Cette allocation préalable à la transmission des données procède par la création d'un contexte PDP («Packet Data Protocol»), qui attribue à ce tunnel GTP un identifiant appelé TEID («Tunnel Endpoint Identifier»).

Pour être transmises dans le coeur de réseau 21, les unités de données GTP sont encapsulées dans des paquets UDP/IP de la couche 200. Ces derniers paquets IP sont transmis sur le réseau IP support entre le GGSN 32 et le SGSN 30, 31. Dans le cas d'un système cellulaire de troisième génération, une transmission IP intervient aussi transmis entre le SGSN 31 et le RNC 27.

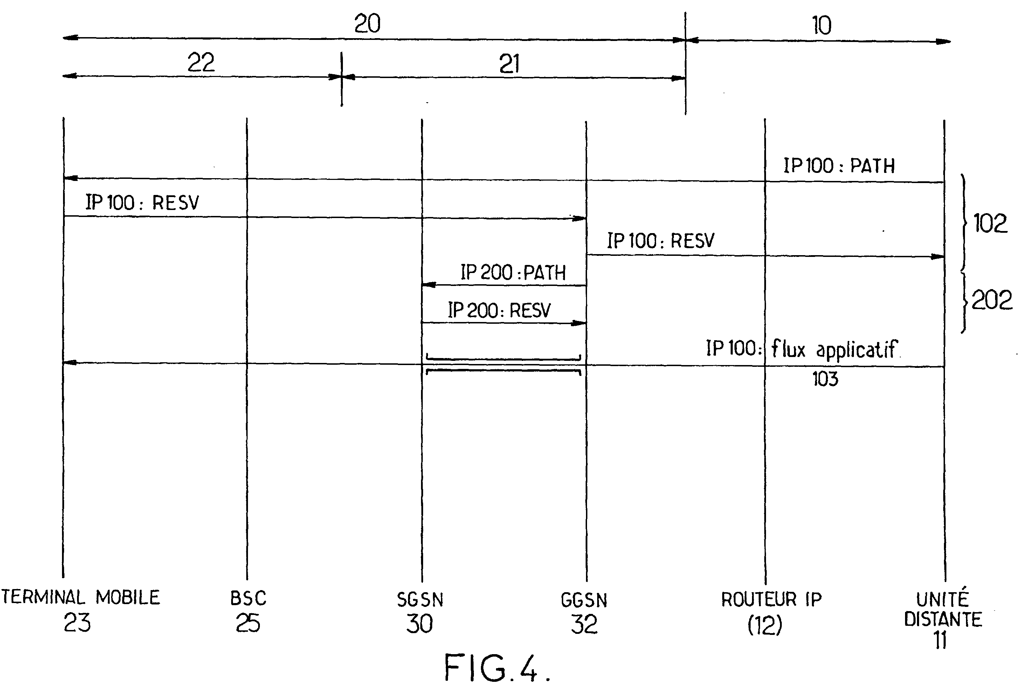

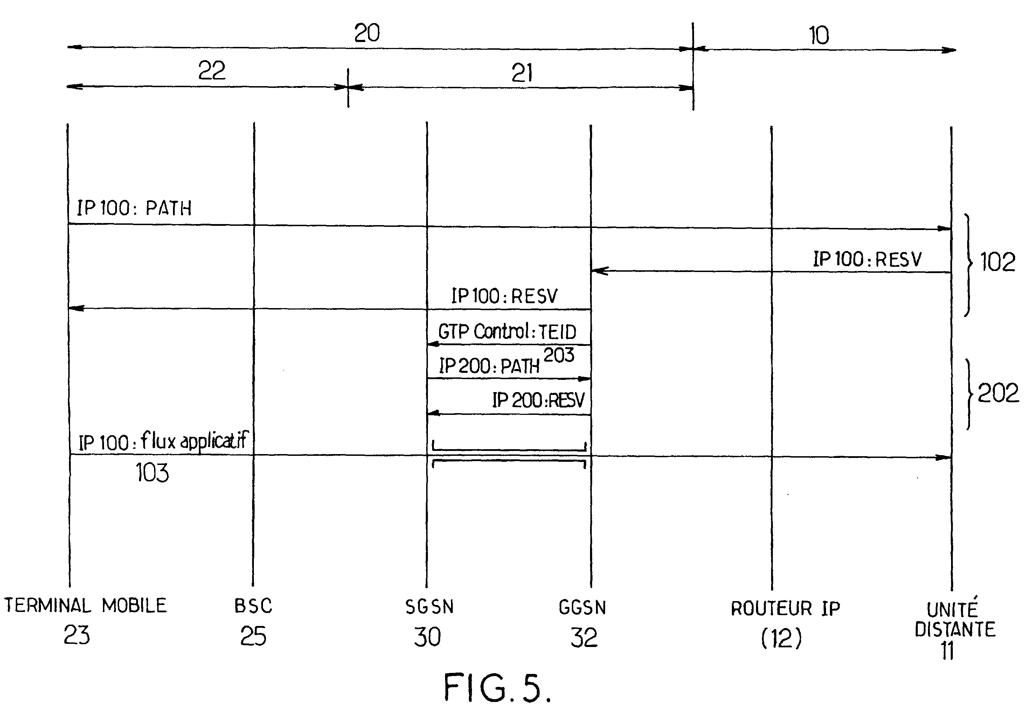

Les figures 4 et 5 illustrent une manière de traiter des flux RSVP de la couche 100 dans un réseau GPRS utilisant des protocoles selon la figure 2. On suppose que le coeur de réseau 21 prend déjà en compte, de façon connue en soi (voir la spécification 3GPP TS 29.060 précitée), un contexte PDP pour le terminal mobile concerné 23, ce contexte PDP incluant notamment un identifiant de tunnel GTP entre le GGSN et le SGSN (TEID).

Pour un flux applicatif faisant l'objet d'une session de réservation dynamique RSVP, la procédure de cette réservation est effectuée de façon classique entre l'unité distante 11 et le terminal mobile 23, comme spécifié dans la RFC 2205. Pour cela, la source du flux applicatif, c'est-à-dire l'unité distante 11 pour un flux applicatif descendant (figure 4), ou le terminal mobile 23 pour un flux applicatif montant (figure 5), émet en direction du destinataire un message PATH de la couche IP 100. Sur les figures 4 et 5, la référence 102 désigne les messages échangés pour l'établissement ou le maintien de ces sessions RSVP au niveau de la couche IP 100.

Le message PATH, outre l'adresse IP et le numéro de port UDP de la source du flux applicatif (FilterSpec), contient des données (FlowSpec) décrivant la qualité de service demandée pour le flux applicatif.

En réponse à ce message PATH, le destinataire du flux applicatif retourne en direction de la source un message RESV de la couche IP 100. Ce message RESV est relayé par tous les éléments de transmission du destinataire à la source, et indique la disponibilité de ressources suffisantes dans chacun de ces éléments par rapport à la requête du message PATH, en confirmant que ces ressources ont été dûment réservées. Le GGSN 32 procède aussi aux réservations requises lorsqu'il reçoit ce message RESV au niveau de son interface avec la couche IP interne 100.

En réponse à la détection par le GGSN de ces messages 102, et en particulier du message RESV, des actions sont accomplies dans le cadre d'une session RSVP de la couche IP externe 200 entre le GGSN et le SGSN. Sur les figures 4 et 5, la référence 202 désigne les messages échangés pour l'établissement ou le maintien de ces sessions RSVP au niveau de la couche IP 200. Lorsque l'échange PATH/RESV détecté dans la couche interne 100 se rapporte à l'établissement d'une nouvelle session RSVP, il en est de même dans la couche externe 200. De même, lorsque l'échange PATH/RESV détecté dans la couche interne 100 se rapporte à la mise à jour d'une session RSVP existante, ce sont également des messages de mise à jour qui sont échangés dans la couche externe 200.

Pour un flux applicatif descendant (figure 4), tout en poursuivant la procédure RSVP au niveau de la couche IP 100, le GGSN 32 associe au TEID du tunnel GTP alloué au terminal 23 (d'après son contexte PDP) une seconde session RSVP portée par la couche IP 200.

Pour identifier les datagrammes IP relevant de cette seconde session RSVP, les paramètres FilterSpec de cette seconde session RSVP comprennent l'adresse IP du GGSN 32 dans le réseau IP de la couche externe 200, ainsi qu'un numéro de port UDP alloué à cette session par le GGSN. Cette allocation du numéro de port UDP est effectuée par le GGSN lors de la détection du premier message RESV relatif au flux applicatif, ce qui réalise la première association avec le TEID correspondant. Ensuite, l'association consiste pour le GGSN à récupérer en mémoire le couple TEID/port UDP approprié sur la base des paramètres FilterSpec spécifiés pour la session RSVP de la couche interne 100.

Les paramètres de qualité de service FlowSpec de la seconde session RSVP portée par la couche IP 200 sont déterminés d'après ceux de la première session RSVP portée par la couche IP 100 et éventuellement d'après le contexte PDP.

Ayant détecté le message RESV de la couche externe 100 et effectué l'association requise avec le tunnel GTP et la seconde session, le GGSN émet à destination du SGSN un message PATH consistant en un paquet IP de la couche 200 contenant les paramètres requis conformément aux spécifications RSVP. Lorsque les ressources demandées ont pu être réservées par le SGSN et par tout routeur de la couche 200 éventuellement présent entre le SGSN et le GGSN, ce dernier reçoit le message RESV issu du SGSN.

Il peut alors faire passer le trafic du flux applicatif dans le tunnel GTP/RSVP établi vers le SGSN (référence 103 sur la figure 4). Le flux applicatif à qualité de service bénéficie donc de la réservation de ressources entre le GGSN 32 et le SGSN 30 au niveau de la couche IP 200, contribuant à la qualité du service global délivré. On limite notamment les risques de voir la première session, établie pour le flux applicatif dans la couche 100, compromise à cause d'une transmission «best effort» dans le coeur de réseau 21.

Pour un flux applicatif montant (figure 5), le GGSN 32 ne peut pas envoyer le message PATH vers le SGSN puisque les données du flux circuleront en sens inverse. Il communique au SGSN 30 l'identifiant TEID du tunnel GTP à travers lequel il reçoit les paquets montants qui contiennent l'adresse IP source indiquée dans les paramètres FilterSpec. Cet identifiant TEID est trouvé dans l'en-tête GTP des unités de données dans lesquelles sont encapsulés les paquets montants du flux concerné.

Pour communiquer le TEID au SGSN, on peut utiliser un message spécifique 203 du plan de contrôle GTP-C du protocole GTP. Ce message de contrôle 203 peut être signalé par une valeur spécifique placée dans le champ de type de message («message-type») de l'en-tête GTP (voir spécification technique 3GPP TS 29.060, v8.3.0, paragraphe 7.1).

Pour définir les paramètres de qualité de service propres à la session RSVP de la couche externe 200, ce message de contrôle 203 peut avoir des champs prévus pour véhiculer les paramètres FlowSpec de la session RSVP de la couche IP 100, que le GGSN obtient dans la signalisation PATH/RESV.

Pour ce sens montant du flux applicatif, selon l'invention, le SGSN 30 réalise alors l'association entre le TEID du tunnel GTP et la seconde session RSVP portée par la couche IP 200. Le SGSN détermine les paramètres pertinents de cette seconde session de la même manière que celle suivie par le GGSN 32 dans le cas d'un flux applicatif descendant : la première fois, il alloue un numéro de port source UDP pour distinguer la nouvelle session tunnel, et il émet un message PATH avec des paramètres FlowSpec déterminés d'après ceux de la première session RSVP qui ont été indiqués par le GGSN dans le message 203 et éventuellement d'après le contexte PDP. Pour les mises à jour d'une session existante, le SGSN récupère en mémoire l'association TEID/port UDP pour générer le message PATH dans la couche IP 200.

La seconde session RSVP est alors poursuivie de façon standard entre le SGSN 30 et le GGSN 32.

De même que pour le sens descendant de transmission du flux applicatif, si l'initiation de la session RSVP au niveau de la couche IP 100 a abouti à un bilan positif des ressources disponibles dans tous les éléments de transmission intermédiaires entre le terminal mobile 23 et l'unité distante 11, la transmission 103 du flux applicatif est débutée avec le niveau de qualité de service demandé. Cette transmission 103 bénéficie en outre, selon l'invention, de la réservation de ressources entre le SGSN 30 et le GGSN 32 au niveau de la couche IP 200, contribuant à la qualité du service global délivré.

Dans le cas où la première session RSVP échoue après la réception du message RESV par le GGSN 32, et où ce GGSN 32 a déjà initié la session RSVP tunnel, le GGSN 32 doit interrompre cette dernière au niveau de la couche IP 200. Cette interruption est initiée par le GGSN 32 lorsqu'il détecte sur son interface avec la couche IP 100 le message RESV-ERROR d'échec de la première session RSVP. Pour un flux applicatif descendant, il retrouve les paramètres de la session RSVP et émet un paquet de signalisation portant un message de type RESV-ERROR en direction du SGSN 30. Pour un flux applicatif montant, le GGSN 32 renvoie au SGSN 30 un paquet de signalisation portant un message de type PATH-ERROR (on peut aussi prévoir un autre message spécifique GTP-C).

Le procédé précédemment décrit est applicable de la même manière entre le GGSN 32 et le SGSN 31 dans un système cellulaire de troisième génération (figure 3).

Dans ce cas, on peut aller plus loin en réalisant aussi des sessions RSVP entre le SGSN 31 et le RNC 27 puisque celui-ci communique aussi avec le SGSN suivant les protocoles IP et GTP à travers l'interface «lu».

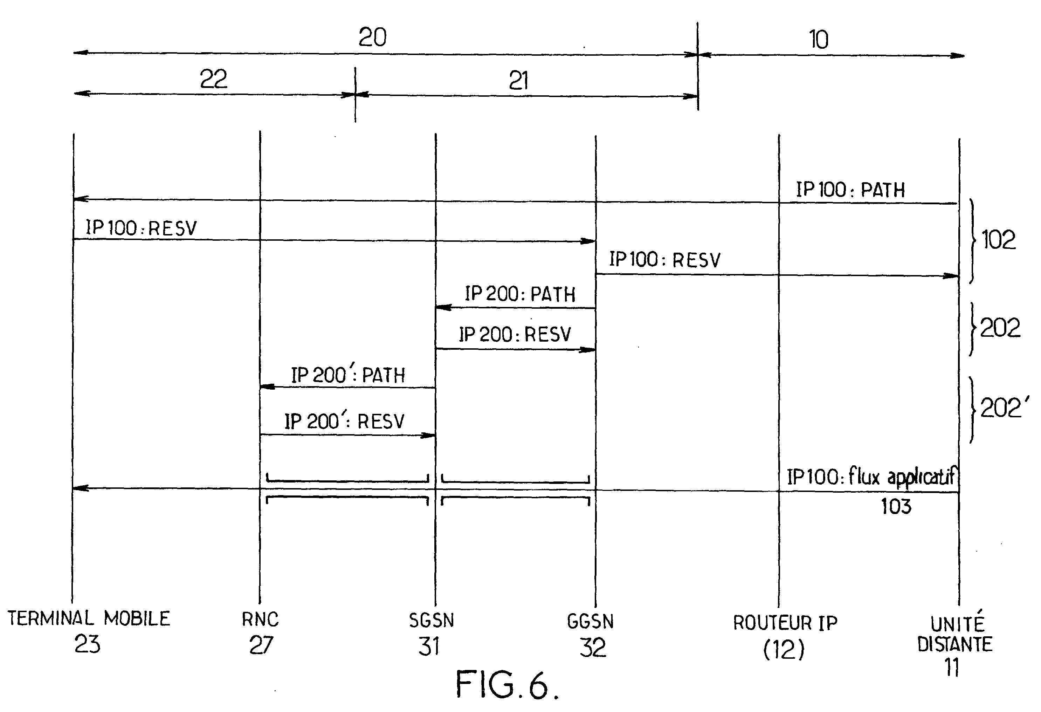

Pour un flux applicatif descendant, selon la figure 6, la session RSVP est étendue au tunnel GTP existant entre le SGSN 31 et le RNC 27. Le SGSN 31 reçoit de la part du GGSN 32 un message PATH de la couche IP 200 relatif à la seconde session RSVP de la manière décrite précédemment. Il poursuit alors de façon standard la procédure RSVP 202 au niveau de la couche IP 200. Simultanément le SGSN 31 réalise une autre association entre l'identifiant TEID du tunnel GTP et une troisième session RSVP. Cette autre association est réalisée de façon analogue à la première association effectuée par le GGSN 32. Le SGSN 31 identifie les paramètres de cette troisième session RSVP d'après ceux de la seconde session RSVP contenus dans le message PATH reçu par ce SGSN relativement à cette seconde session, et éventuellement d'après le contexte PDP. Cette troisième session RSVP est portée par la couche IP 200' et est poursuivie normalement entre le SGSN 31 et le RNC 27 par la circulation des messages 202' indiqués sur la figure 6.

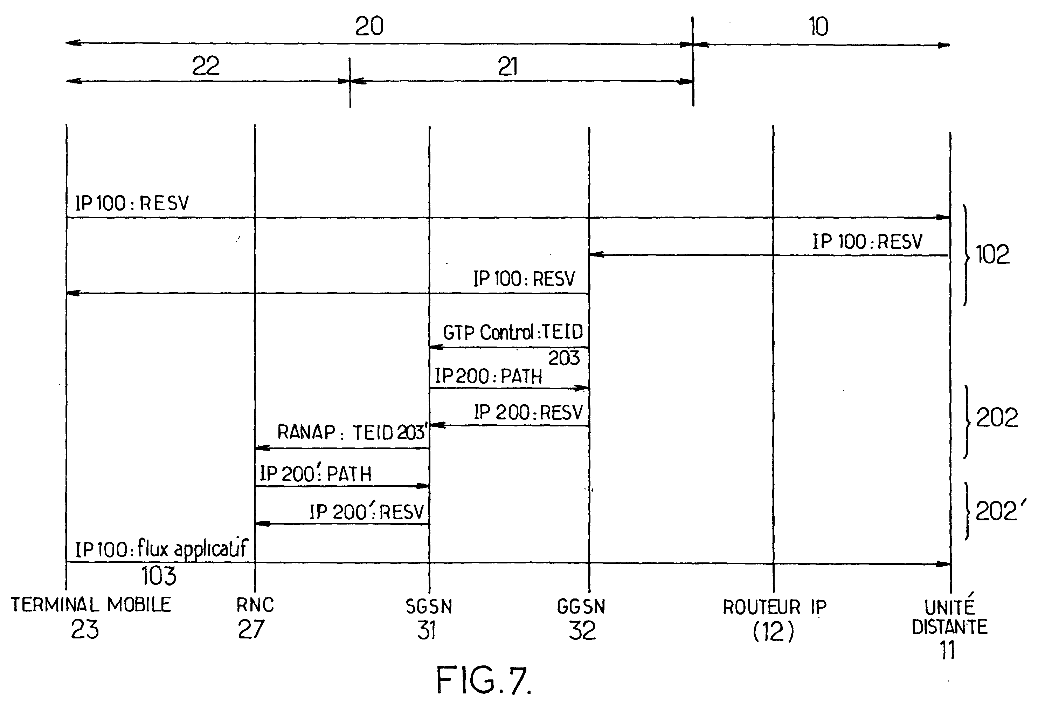

Pour un flux applicatif montant, selon la figure 7, le SGSN 31 reçoit le message spécifique GTP-C 203 de la part du GGSN 32 de la manière décrite précédemment. Il procède alors à l'initialisation de la session RSVP au niveau de la couche IP 200. Le message 203 contient l'identifiant TEID du tunnel GTP à travers lequel il reçoit les paquets montants. A son tour le SGSN 31 émet un message spécifique 203' à destination du RNC 27, afin de lui retransmettre l'identifiant TEID. Ce message de contrôle 203' est porté par la couche IP 200', et peut par exemple relever du protocole RANAP («Radio Access Network Application Part», voir la spécification technique 3G TS 25.413, version 3.2.0 publiée en juin 200 par le 3GPP) utilisé à l'interface «lu» entre le SGSN 31 et le RNC 27. Il reprend au moins une partie des paramètres du message de contrôle 203. Le RNC 27 effectue alors une autre association entre ce TEID et une troisième session RSVP. Pour ce faire, il procède de la même façon que le SGSN 31 pour la seconde session RSVP. Cette troisième session RSVP est établie dans la couche IP 200' et poursuivie normalement entre ce RNC 27 et le SGSN 31 par la circulation des messages 202' indiqués sur la figure 7.

## Revendications

1. Procédé de transmission de paquets selon un premier réseau IP (12) à travers un système cellulaire de radiocommunication (20) ayant des équipements reliés entre eux par l'intermédiaire d'un second réseau IP, lesdits équipements comportant au moins un routeur-passerelle (32) ayant une première interface pour échanger des premiers paquets selon le premier réseau IP et une seconde interface pour échanger des seconds paquets selon le second réseau IP, et au moins un noeud de commutation (30, 31) ayant une première interface avec un réseau d'accès radio (22) procurant des liaisons avec des terminaux radio (23) et une seconde interface pour échanger des seconds paquets selon le second réseau IP, dans lequel certains au moins des terminaux radio comportent des moyens de communication selon le premier réseau IP à travers le système cellulaire, le routeur-passerelle constituant, dans le premier réseau IP, un routeur de périphérie qui échange des premiers paquets avec lesdits terminaux en un seul bond du premier réseau IP, chacun desdits premiers paquets échangés étant encapsulé dans au moins une unité de données d'un protocole tunnel mis en oeuvre entre les secondes interfaces d'un routeur-passerelle et d'un noeud de commutation, ladite unité de données incluant une identité de tunnel et étant elle-même encapsulée dans au moins un second paquet, le procédé comprenant les étapes suivantes :
- détecter des premiers paquets de signalisation portant des messages RESV du protocole RSVP concernant une première session RSVP dans le premier réseau IP relative à un flux applicatif de premiers paquets entre un terminal radio et une unité distante reliée au premier réseau IP ;
- en réponse à la détection de certains au moins des premiers paquets de signalisation, associer une seconde session RSVP dans le second réseau IP à une identité de tunnel incluse dans les unités de données dans lesquelles sont encapsulés les premiers paquets du flux applicatif, la seconde session étant relative à un flux de seconds paquets dans lesquels lesdites unités de données sont encapsulées entre un routeur-passerelle et un noeud de commutation ; et
- transmettre des seconds paquets de signalisation dans le second réseau IP pour établir et/ou mettre à jour des paramètres de la seconde session associée à ladite identité de tunnel.

2. Procédé selon la revendication 1, dans lequel l'association de la seconde session RSVP à ladite identité de tunnel comprend l'affectation à ladite seconde session RSVP de paramètres de qualité de service sélectionnés en fonction de paramètres de qualité de service affectés à la première session RSVP et obtenus à partir des premiers paquets de signalisation détectés.

3. Procédé selon la revendication 1 ou 2, dans lequel l'étape de détection des premiers paquets de signalisation est exécutée au niveau de la première interface du routeur-passerelle (32).

4. Procédé selon la revendication 3, dans lequel ledit flux applicatif de premiers paquets est un flux descendant, depuis l'unité distante (11) reliée au premier réseau IP (12) vers le terminal radio (23).

5. Procédé selon la revendication 4, dans lequel, en réponse à la détection du message RESV, le routeur-passerelle (32) associe la seconde session RSVP à l'identité de tunnel incluse dans les unités de données dans lesquelles sont encapsulés les premiers paquets du flux applicatif et émet un message PATH du protocole RSVP sur le second réseau IP à destination du noeud de commutation (30, 31).

6. Procédé selon la revendication 3, dans lequel ledit flux applicatif de premiers paquets est un flux montant, depuis le terminal radio (23) vers l'unité distante (11) reliée au premier réseau IP (12).

7. Procédé selon la revendication 6, comprenant l'étape suivante en réponse à la détection de certains au moins des premiers paquets de signalisation au niveau de la première interface du routeur-passerelle :
- transmission du routeur-passerelle (32) au noeud de commutation (30, 31), par l'intermédiaire du second réseau IP, d'un message de contrôle relevant d'un plan de contrôle du protocole tunnel et désignant l'identité de tunnel incluse dans les unités de données dans lesquelles sont encapsulés les premiers paquets du flux applicatif,
et dans lequel l'association de la seconde session RSVP à l'identité de tunnel désignée dans le message de contrôle est effectuée par ledit noeud de commutation (30, 31).

8. Procédé selon la revendication 7, dans lequel le message de contrôle désignant l'identité de tunnel contient aussi au moins certains paramètres de qualité de service de la première session RSVP.

9. Procédé selon la revendication 8, dans lequel, en réponse à la détection dudit message de contrôle, le noeud de commutation (30, 31) associe la seconde session RSVP à l'identité de tunnel désignée et émet un message PATH du protocole RSVP sur le second réseau IP à destination du routeur-passerelle (32).

10. Procédé selon l'une quelconque des revendications précédentes, dans lequel le réseau d'accès radio (22) comprend des organes de contrôle (27) pourvus d'interfaces de réseau communiquant avec la première interface d'accès d'au moins un noeud de commutation (31) par l'intermédiaire d'un troisième réseau IP, une partie au moins dudit protocole tunnel étant mise en oeuvre entre les interfaces de réseau desdits organes de contrôle et la première interface d'accès du noeud de commutation,
et dans lequel, en réponse à l'association à une identité de tunnel d'une seconde session RSVP relative à un flux de seconds paquets dans lesquels des unités de données du protocole tunnel sont encapsulées entre un routeur-passerelle (32) et un noeud de commutation, on associe à ladite identité de tunnel une troisième session RSVP dans le troisième réseau IP, pour transporter entre le noeud de commutation et un organe de contrôle (27) du réseau d'accès radio des paquets IP dans lesquels lesdites unités de données sont encapsulées.

11. Système cellulaire de radiocommunication (20) comprenant des équipements de réseau agencés pour mettre en oeuvre un procédé selon l'une quelconque des revendications précédentes.

12. Routeur-passerelle ayant une première interface pour échanger des premiers paquets selon un premier réseau IP (12) et une seconde interface pour échanger des seconds paquets selon un second réseau IP, le routeur-passerelle constituant un routeur de périphérie du premier réseau IP, agencé pour échanger des premiers paquets avec des terminaux radio (23) en un seul bond du premier réseau IP, chacun desdits premiers paquets échangés étant encapsulé dans au moins une unité de données d'un protocole tunnel mis en oeuvre entre ladite seconde interface et un noeud de commutation (30, 31), ladite unité de données incluant une identité de tunnel et étant elle-même encapsulée dans au moins un second paquet échangé selon le second réseau IP, le routeur-passerelle (32) comprenant :
- des moyens pour détecter sur la première interface des premiers paquets de signalisation portant des messages RESV du protocole RSVP concernant une première session du protocole RSVP dans le premier réseau IP relative à un flux applicatif de premiers paquets entre un terminal radio et une unité distante reliée au premier réseau IP ;
- des moyens pour, en réponse à la détection de certains au moins des premiers paquets de signalisation, associer une seconde session RSVP dans le second réseau IP à une identité de tunnel incluse dans les unités de données dans lesquelles sont encapsulés les premiers paquets du flux applicatif, la seconde session RSVP étant relative à un flux de seconds paquets dans lesquels lesdites unités de données sont encapsulées entre ladite seconde interface et un noeud de commutation ;
- des moyens pour transmettre des seconds paquets de signalisation dans le second réseau IP pour établir et/ou mettre à jour des paramètres de la seconde session associée à ladite identité de tunnel.

13. Routeur-passerelle selon la revendication 12, dans lequel ledit flux applicatif de premiers paquets est un flux descendant, depuis une unité distante (11) reliée au premier réseau IP (12) vers le terminal radio (23), et dans lequel les moyens pour associer la seconde session RSVP à l'identité de tunnel comprennent des moyens pour inclure un numéro de port UDP alloué au flux applicatif dans des paramètres de la seconde session RSVP.

14. Routeur-passerelle selon la revendication 13, dans lequel les moyens pour transmettre des seconds paquets de signalisation comprennent des moyens d'émission d'un message PATH du protocole RSVP sur le second réseau IP à destination dudit noeud de commutation (30, 31).

15. Routeur-passerelle selon la revendication 12, dans lequel ledit flux applicatif de premiers paquets est un flux montant, depuis le terminal radio (23) vers l'unité distante (11) reliée au premier réseau IP (12), et dans lequel les moyens pour associer la seconde session RSVP à l'identité de tunnel comprennent des moyens pour transmettre au noeud de commutation (30, 31), par l'intermédiaire du second réseau IP, un message de contrôle relevant d'un plan de contrôle du protocole tunnel et désignant l'identité de tunnel incluse dans les unités de données dans lesquelles sont encapsulés les premiers paquets du flux applicatif.

16. Routeur-passerelle selon la revendication 15, dans lequel le message de contrôle désignant l'identité de tunnel contient en outre au moins certains paramètres de qualité de service de la première session RSVP.

17. Noeud de commutation de coeur de réseau de système cellulaire de radiocommunication pour la mise en oeuvre d'un procédé selon l'une quelconque des revendications 7 à 9, comprenant une première interface avec un réseau d'accès radio (22) procurant des liaisons avec des terminaux radio (23) et une seconde interface pour échanger des paquets selon un réseau IP avec au moins un routeur-passerelle (32), lesdits paquets portant des unités de données d'un protocole tunnel supporté par la seconde interface, chaque unité de données incluant une identité de tunnel et des données constituant soit un message de contrôle si l'unité de données relève d'un plan de contrôle du protocole tunnel, soit des données d'utilisateur si l'unité de données relève d'un plan d'utilisateur du protocole tunnel, le noeud de commutation (30, 31) comprenant aussi des moyens pour, en réponse à la réception depuis un routeur-passerelle d'une unité de données spécifique du protocole tunnel relevant du plan de contrôle, associer une session du protocole RSVP dans ledit réseau IP à une identité de tunnel désignée dans le message de contrôle de ladite unité de données spécifique et transmettre audit routeur-passerelle au moins un paquet de signalisation dans le réseau IP pour établir et/ou mettre à jour des paramètres de la session associée à l'identité de tunnel désignée dans le message de contrôle, ladite session étant relative à un flux de paquets dans lequel sont encapsulées des unités de données du protocole tunnel relevant du plan d'utilisateur et comportant l'identité de tunnel désignée dans le message de contrôle,
la première interface du noeud de commutation supportant le protocole IP et le plan d'utilisateur du protocole tunnel pour communiquer avec des organes de contrôle (27) du réseau d'accès radio (22), et le noeud de commutation (30, 31) comprenant en outre des moyens pour, en réponse à l'association à une identité de tunnel d'une session RSVP relative à un flux de paquets dans lesquels des unités de données du protocole tunnel relevant du plan d'utilisateur et comportant une identité de tunnel sont encapsulées entre le noeud de commutation et un routeur-passerelle (32), associer à ladite identité de tunnel une autre session RSVP, pour transporter entre le noeud de commutation et un organe de contrôle (27) du réseau d'accès radio des paquets IP dans lesquels lesdites unités de données sont encapsulées.

18. Noeud de commutation selon la revendication 17, dans lequel les moyens pour transmettre ledit paquet de signalisation sont agencés pour inclure dans ledit paquet des paramètres de qualité de service contenus dans le message de contrôle.

19. Noeud de commutation selon la revendication 17 ou 18, dans lequel ledit paquet de signalisation porte un message PATH du protocole RSVP.

20. Contrôleur de réseau radio de système cellulaire de radiocommunication pour la mise en oeuvre d'un procédé selon la revendication 10, comprenant une première interface de communication avec des terminaux radio (23) et une seconde interface pour échanger des paquets selon un réseau IP avec au moins un noeud de commutation (30, 31), lesdits paquets portant des unités de données d'utilisateur d'un protocole tunnel supporté par la seconde interface, chaque unité de données d'utilisateur incluant une identité de tunnel, le contrôleur de réseau radio (27) comprenant en outre des moyens pour, en réponse à la réception depuis un noeud de commutation d'un message de contrôle désignant une identité de tunnel, associer une session RSVP dans ledit réseau IP à l'identité de tunnel désignée dans le message de contrôle et transmettre audit noeud de commutation au moins un paquet de signalisation dans le réseau IP pour établir et/ou mettre à jour des paramètres de la session RSVP associée à l'identité de tunnel désignée dans le message de contrôle, ladite session RSVP étant relative à un flux de paquets dans lequel sont encapsulées des unités de données du protocole tunnel comportant l'identité de tunnel désignée dans le message de contrôle.

21. Contrôleur de réseau radio selon la revendication 20, dans lequel les moyens pour transmettre ledit paquet de signalisation sont agencés pour inclure dans ledit paquet des paramètres de qualité de service contenus dans le message de contrôle.

22. Contrôleur de réseau radio selon la revendication 20 ou 21, dans lequel ledit paquet de signalisation porte un message PATH du protocole RSVP.

## Patentansprüche

1. Paketübertragungsverfahren auf einem ersten IP-Netz (12) über ein zelluläres Funkkommunikationssystem (20), das untereinander mittels eines zweiten IP-Netzes verbundene Vorrichtungen aufweist, wobei die Vorrichtungen umfassen: wenigstens einen Gateway-Router (32), welcher eine erste Schnittstelle zum Austauschen von ersten Paketen auf dem ersten IP-Netz und eine zweite Schnittstelle zum Austauschen von zweiten Paketen auf dem zweiten IP-Netz aufweist, und wenigstens einen Schaltknoten (30, 31), welcher eine erste Schnittstelle mit einem Funkzugangsnetz (22), um Verbindungen mit Funkendgeräten (23) zu schaffen, und eine zweite Schnittstelle zum Austauschen von zweiten Pakete auf dem zweiten IP-Netz aufweist, in welchem wenigstens gewisse Funkendgeräte Mittel zur Kommunikation auf dem ersten IP-Netz über das zelluläre System umfassen, wobei der Gateway-Router im ersten IP-Netz einen Peripherie-Router bildet, welcher erste Pakete mit den Endgeräten austauscht auf einer einzelnen Stufe des ersten IP-Netzes, wobei jedes der ausgetauschten ersten Pakete in wenigstens einer Dateneinheit eines Tunnelprotokolls, welches zwischen den zweiten Schnittstellen eines Gateway-Routers und einem Schaltknoten umgesetzt wird, eingekapselt ist, wobei die Dateneinheit eine Tunnelidentität enthält, welche selbst in wenigstens einem zweiten Paket eingekapselt ist, wobei das Verfahren die folgenden Schritte umfasst:
- Erfassen von ersten Kennungspaketen, welche RESV-Mittelungen im RSVP-Protokoll betreffend eine erste RSVP-Session im ersten IP-Netz tragen, welche auf einen Anwendungsprogramm-Fluss erster Pakete zwischen einem Funkendgerät und einer entfernten, mit dem ersten IP-Netz verbundenen Einheit bezogen ist;
- in Antwort auf die Erfassung wenigstens bestimmer erster Kennungspakete Zuordnen einer zweiten RSVP-Session im zweiten IP-Netz zu einer in den Dateneinheiten eingeschlossenen Tunnelidentität, in welchen die ersten Pakete des Applikationsprogramm-Flusses eingekapselt sind, wobei die zweite Session auf einen Fluss von zweiten Paketen bezogen ist, in welchen die Dateneinheiten zwischen einem Gateway-Router und einem Schaltknoten eingekapselt sind; und
- Übertragen von zweiten Kennungspaketen im zweiten IP-Netz zum Festlegen und/oder Aktualisieren von Parametern der zweiten Session, welche der Tunnelidentität zugeordnet ist.

2. Verfahren nach Anspruch 1, bei welchem die Zuordnung der zweiten RSVP-Session zur Tunnelidentität die Verwendung von ausgewählten Dienst-Qualitätsparametern für die zweite RSVP-Session umfasst, welche in Funktion von die erste RSVP-Session betreffenden Dienst-Qualitätsparametern ausgewählt sind und ausgehend von erfassten ersten Kennungspaketen erhalten werden.

3. Verfahren nach Anspruch 1 oder 2, bei welchem der Schritt der Erfassung erster Kennungspakete auf der Ebene der ersten Schnittstelle des Gateway-Routers (32) ausgeführt wird.

4. Verfahren nach Anspruch 3, bei welchem der Applikationsprogram-Fluss erster Pakete ein absteigender Fluss von der entfernten mit dem ersten IP-Netz (12) verbundenen Einheit (11) zum Funkendgerät (23) ist.

5. Verfahren nach Anspruch 4, bei welchem der Gateway-Router (32) in Antwort auf die Erfassung der RESV-Meldung die zweite RSVP-Session der Tunnelidentität zuordnet, welche in den Dateneinheiten eingschlossen ist, in denen die ersten Pakete des Applikationsprogramm-Flusses eingekapselt sind, und eine PATH-Meldung im RSVP-Protokoll auf dem zweiten IP-Netz ausgibt mit dem Schlaltknoten (30, 31) als Bestimmungsort.

6. Verfahren nach Anspruch 3, bei welchem der Applikationsprogramm-Fluss erster Pakete ein ansteigender Fluss vom Funkendgerät (23) zur entfernten, mit dem ersten IP-Netz (12) verbundenen Einheit (11) ist.

7. Verfahren nach Anspruch 6, umfassend den folgenden Schritt in Antwort auf die Erfassung wenigstens bestimmter erster Kennungs-Pakete auf der Ebene der ersten Schnittstelle des Gateway-Routers:
- Übertragung einer Prüfmeldungung vom Gateway-Router (32) zum Schaltknoten (30, 31) mittels des zweiten IP-Netzes, welche einer Prüfebene des Tunnelprotokolls untersteht und welche die Tunnelidentität beschreibt, welche in den Dateneinheiten eingschlossen ist, in denen die ersten Pakete des Applikationsprogramm-Flusses eingekapselt sind,
und bei dem die Zuordnung der zweiten RSVP-Session zu der in der Prüfmeldung bezeichneten Tunnelidentiät durch den Schaltknoten (30, 31) ausgeführt wird.

8. Verfahren nach Anspruch 7, bei welchem die Prüfmeldung, welche die Tunnelidentität bezeichnet, auch wenigstens bestimmte Dienst-Qualitätsparameter der ersten RSVP-Session enthält.

9. Verfahren nach Anspruch 8, bei welchem der Schaltknoten (30, 31) in Antwort auf die Erfassung der Prüfmeldung die zweite RSVP-Session der bezeichneten Tunnelidentität zuordnet und eine PATH-Meldung im RSVP-Protokoll auf dem zweiten IP-Netz ausgibt mit dem Gatway-Router (32) als Bestimmungsort.

10. Verfahren nach einem der vorhergehenden Ansprüche, bei welchem das Funkzugangsnetz (22) als Netz-Schnittstellen vorgesehene Prüfeinrichtungen (27) umfasst, welche mit der ersten Zugangs-Schnittstelle wenigstens eines Schaltknotens (31) mittels eines dritten IP-Netzes kommunizieren, wobei wenigstens ein Teil des Tunnelprotokolls zwischen den Schnittstellen des Netzes der Prüfeinrichtungen und der ersten Zugangsschnittstelle des Schaltknotens verwendet wird,
und bei welchem in Antwort auf die Zuordnung einer zweiten RSVP-Session zu einer Tunnelidentität, welche RSVP-Session auf einen Fluss zweiter Pakete bezogen ist, in denen die Dateneinheiten des Tunnelprotokolls eingekapselt sind zwischen einen Gateway-Router (32) und einem Schaltknoten, der Tunnelidentität eine dritte RSVP-Session im dritten IP-Netz zugeordnet wird, um zwischen dem Schaltknoten und einer Prüfeinrichtung (27) des Funkzugangsnetzes IP-Pakete zu transportieren, in denen die Dateneinheiten eingekapselt sind.

11. Zelluläres Funkkommunikationssystem (20), welches Netzvorrichtungen umfasst, welche ausgerüstet sind, ein Verfahren nach einem der vorhergehenden Ansprüche umzusetzen.

12. Gateway-Router, welcher eine erste Schnittstelle zum Austauschen von ersten Paketen auf einem ersten IP-Netz (12) und eine zweite Schnittstelle zum Austauschen von zweiten Paketen auf einem zweiten IP-Netz umfasst, wobei der Gateway-Router einen Peripherie-Router des ersten IP-Netzes bildet, der dazu ausgerüstet ist, erste Pakete mit Funkendgeräten (23) auf einer einzelnen Stufe des ersten IP-Netzes auszutauschen, wobei jedes der ersten ausgetauschten Pakete in wenigstens einer Dateneinheit eines Tunnelprotokolls eingekapselt ist, welches zwischen der zweiten Schnittstelle und einem Schaltknoten (30, 31) umgesetzt ist, wobei die Dateneinheit eine Tunnelidentität einschließt und selbst in wenigstens einem zweiten, auf dem zweiten IP-Netz ausgetauschten Paket eingekapselt ist, wobei der Gateway-Router (32) umfasst:
- Mittel zum Erfassen erster Kennungspakete bei der ersten Schnittstelle, welche RESV-Meldungen im RSVP-Protokoll tragen betreffend eine erste Session im RSVP-Protokoll im ersten IP-Netz, welche Session auf einen Applikationsprogramm-Fluss erster Pakete zwischen einem Funkendgerät und einer mit dem ersten IP-Netz verbundenen entfernten Einheit bezogen ist;
- in Antwort auf die Erfassung wenigstens bestimmer erster Kennungspakete Mittel zum Zuordnen einer zweiten RSVP-Session im zweiten IP-Netz zu einer in den Dateneinheiten eingeschlossenen Tunnelidentität, in welchen die ersten Pakete des Applikationsprogramm-Flusses eingekapselt sind, wobei die zweite RSVP-Session auf einen Fluss von zweiten Paketen bezogen ist, in welchen die Dateneinheiten zwischen der zweiten Schnittstelle und einem Schaltknoten eingekapselt sind;
- Mittel zum Übertragen der zweiten Kennungspakete im zweiten IP-Netz zum Festlegen und/oder Aktualisieren von Parametern der zweiten Session, welche der Tunnelidentität zugeordnet ist.

13. Gateway-Router nach Anspruch 12, in welchem der Applikationsprogramm-Fluss erster Pakete ein absteigender Fluss von einer entfernten, mit dem ersten IP-Netz (12) verbundenen Einheit (11) zum Funkendgerät (23) ist, und in welchem Mittel zum Zuordnen der zweiten RSVP-Session zur Tunnelidentität Mittel umfassen, um eine UDP-Portnummer einzubeziehen, welche dem Applikationsprogramm-Fluss in Parametern der zweiten RSVP-Session zugewiesen ist.

14. Gateway-Router nach Anspruch 13, in welchem die Mittel zum Übertragen zweiter Kennungspakete Mittel zur Ausgabe einer PATH-Meldung im RSVP-Protokoll auf dem zweiten IP-Netz mit dem Schaltknoten (30, 31) als Bestimmungsort umfassen.

15. Gateway-Router nach Anspruch 12, in welchem der Applikationsprogramm-Fluss erster Pakete ein ansteigender Fluss vom Funkendgerät (23) zur entfernten, mit dem ersten IP-Netz (12) verbundenen Einheit (11) ist, und in welchem Mittel zum Zuordnen der zweiten RSVP-Session zur Tunnelidentität Mittel zum Übertragen einer Prüfmeldung vom Gateway-Router (32) zum Schaltknoten (30, 31) mittels des zweiten IP-Netzes umfassen, welche Prüfmeldung einer Prüfebene des Tunnelprotokolls untersteht und die Tunnelidentität bezeichnet, welche in den Dateneinheiten eingschlossen ist, in denen die ersten Pakete des Applikationsprogramm-Flusses eingekapselt sind.

16. Gateway-Router nach Anspruch 15, in welchem die die Tunnelidentität bezeichnende Prüfmeldung ferner wenigstens bestimmte Dienst-Qualitätsparameter der ersten RSVP-Session enthält.

17. Schaltknoten eines Netz-Herzstücks eines zellulären Funkkommunikations-Systems, um ein Verfahren entsprechend einem der Ansprüche 7 bis 9 umzusetzen, umfassend eine erste Schnittstelle mit einem Funkzugangsnetz (22), welches Verbindungen mit Funkendgeräten (23) schafft, und eine zweite Schnittstelle zum Austauschen von Paketen auf einem IP-Netz mit wenigstens einem Gateway-Router (32), wobei die Pakete Dateneinheiten in einem durch die zweite Schnittstelle unterstützten Tunnelprotokoll tragen, wobei jede Dateneinheit eine Tunnelidentität einschließt und Daten, welche entweder eine Prüfmeldung bilden, wenn die Dateneinheit einer Prüfebene des Tunnelprotokolls untersteht, oder Anwenderdaten, wenn die Dateneinheit einer Anwenderebene des Tunnelprotokolls untersteht, einschließt, wobei der Schaltknoten (30, 31) auch Mittel umfasst, um in Antwort auf den Empfang einer spezifischen Dateneinheit im einer Prüfebene unterstehenden Tunnelprotokoll von einem Gateway-Router eine RSVP-Protokoll-Session im IP-Netz einer in der Prüfmeldung der spezifischen Dateneinheit bezeichneten Tunnelidentiät zuzuordnen und dem Gateway-Router wenigsten ein Kennungspaket im IP-Netz zu übertragen, um Parameter der der bezeichneten Tunnelidentität zugeordneten Session in der Prüfungsmeldung festzulegen und/oder zu aktualisieren, wobei die Session auf einen Fluss von Paketen bezogen ist, in welchem Dateneinheiten im der Anwenderebene unterstehenden Tunnelprotokoll eingekapselt sind, und die bezeichnete Tunnelidentiät in der Prüfmeldung umfasst,
wobei die erste Schnittstelle des Schaltknotens das IP-Protokoll und die Anwenderebene des Tunnelprotokolls unterstützt, um mit Prüfeinrichtungen (27) des Funkzugangnetzes (22) zu kommunizieren, und wobei der Schaltknoten (30, 31) ferner Mittel umfasst, um in Antwort auf die Zuordnung einer RSVP-Session zu einer Tunnelidentität, welche RSVP-Session auf einen Fluss von Paketen bezogen ist, in welchen Dateneinheiten im der Anwenderebene unterstehenden und eine Tunnelidentität aufweisenden Tunnelprotokoll zwischen dem Schaltknoten und einem Gateway-Router (32) eingekapselt sind, der Tunnelidentität eine andere RSVP-Session zuzuordnen, um zwischen den Schaltknoten und einer Prüfeinrichtug (27) des Funkzugangnetzes IP-Pakete, in denen die Dateneinheiten eingekapselt sind, zu transportieren.

18. Schaltknoten nach Anpruch 17, in welchem die Mittel zum Transportieren des Kennungspakets ausgerüstet sind, um im Paket Dienst-Qualitätsparameter einzuschließen, welche in der Prüfmeldung enthalten sind.

19. Schaltknoten nach Anspruch 17 oder 18, in welchem das Kennungspaket eine PATH-Meldung im RSVP-Protokoll trägt.

20. Funknetzprüfeinrichtung im zellullären Funkkommunikationssystem, um ein Verfahren nach Anspruch 10 umzusetzen, umfassend eine erste Kommunikationsschnittstelle mit Funkendgeräten (23) und eine zweite Schnittstelle zum Austauschen von Paketen auf einem IP-Netz mit wenigstens einem Schaltknoten (30, 31), wobei die Pakete Dateneinheiten im von der zweiten Schnittstelle unterstützten Protokoll tragen, wobei jede Dateneinheit des Anwenders eine Tunnelidentität einschließt, wobei die Funknetzprüfeinrichtung (27) ferner Mittel umfasst, um in Antwort auf den Empfang einer eine Tunnelidentität bezeichnenden Prüfmeldung von einem Schaltknoten eine RSVP-Session im IP-Netz der in der Prüfmeldung bezeichneten Tunnelidentität zuzuordnen und dem Schaltknoten wenigstens ein Kennungspaket im IP-Netz zu übertragen, um Parameter der der bezeichneten Tunnelidentität zugeordneten RSVP-Session festzulegen und/oder zu aktualisieren, wobei die RSVP-Session auf einen Paketfluss bezogen ist, in wechem die Dateneinheiten im Tunnelprotokoll eingekapselt sind, welche die in der Prüfmeldung bezeichnete Tunnelidentität umfasst.

21. Funknetzprüfeinrichtung nach Anspruch 20, in welcher Mittel zum Übertragen der Kennungspakete ausgerüstet sind, um in den Paketen in der Prüfmeldung enthaltene Dienst-Qualitätsparameter zu übertragen.

22. Funknetzprüfeinrichtung nach Anspruch 20 oder 21, in welcher das Kennungspaket eine PATH-Meldung im RSVP-Protokoll trägt.

## Claims

1. Method for transmitting packets along a first IP network (12) via a cellular radio communication system (20) having equipment connected between them through the intermediary of a second IP network, said equipment comprising at least a gateway router (32) having a first interface for exchanging first packets along the first IP network and a second interface for exchanging second packets along the second IP network, and at least a switching node (30, 31) having a first interface with a radio access network (22) providing links with radio terminals (23) and a second interface for exchanging second packets along the second IP network, wherein at least some of the radio terminals include means of communication along the first IP network via the cellular system, the gateway router forming, in the first IP network, an edge router which exchanges first packets with said terminals in a single hop of the first IP network, each of said first packets exchanged being encapsulated in at least one data unit of a tunnel protocol implemented between the second interfaces of a gateway router and a switching node, said data unit including a tunnel identity and itself being encapsulated in at least one second packet, the method comprising the following steps:
- detecting first signalling packets carrying RESV messages of the RSVP protocol concerning a first RSVP session in the first IP network relative to an application flow of first packets between a radio terminal and a remote unit connected to the first IP network;
- in response to the detection of at least some of the first signalling packets, associating a second RSVP session in the second IP network with a tunnel identity included in the data units in which the first packets of the application flow are encapsulated, said second session being relative to a flow of second packets in which said data units are encapsulated between a gateway router and a switching node; and
- transmitting second signalling packets in the second IP network for establishing and/or updating parameters of the second session associated with said tunnel identity.

2. Method according to Claim 1, wherein the association of the second RSVP session with said tunnel identity includes assigning quality-of-service parameters to said second RSVP session, selected according to quality-of-service parameters assigned to the first RSVP session and obtained from the first signalling packets detected.

3. Method according to Claim 1 or Claim 2, wherein the step of detecting first signalling packets is performed at the level of the first interface of the gateway router (32).

4. Method according to Claim 3, wherein said application flow of first packets is a downlink flow, from the remote unit (11) connected to the first IP network (12) towards the radio terminal (23).

5. Method according to Claim 4, wherein, in response to the detection of the RESV message, the gateway router (32) associates the second RSVP session with the tunnel identity included in the data units in which the first packets of the application flow are encapsulated and sends an RSVP protocol PATH message on the second IP network to the switching node (30, 31).

6. Method according to Claim 3, wherein said application flow of first packets is an uplink flow, from the radio terminal (23) to the remote unit (11) connected to the first IP network (12).

7. Method according to Claim 6, including the following step in response to the detection of at least some of the first signalling packets at the level of the first gateway router interface:
- transmission from the gateway router (32) to the switching node (30, 31), through the intermediary of the second IP network, of a control message belonging to a control plane of the tunnel protocol and designating the tunnel identity included in the data units in which the first packets of the application flow are encapsulated.
and wherein the association of the second RSVP session with the tunnel identity designated in the control message is performed by said switching node (30, 31).

8. Method according to Claim 7, wherein the control message designating the tunnel identity also contains at least some quality-of-service parameters of the first RSVP session.

9. Method according to Claim 8, wherein, in response to the detection of said control message, the switching node (30, 31) associates the second RSVP session with the designated tunnel identity and sends an RSVP protocol PATH message on the second IP network to the gateway router (32).

10. Method according to any of the preceding Claims, wherein the radio access network (22) includes control units (27) provided with network interfaces communicating with the first access interface of at least one switching node (31) via the intermediary of a third IP network, at least a part of said tunnel protocol being implemented between the network interfaces of said control units and the first access interface of the switching node,
and wherein, in response to the association with a tunnel identity of a second RSVP session relative to a flow of second packets in which data units of the tunnel protocol are encapsulated between a gateway router (32) and a switching node, there is associated with said tunnel identity a third RSVP session in the third IP network, for transporting between the switching node and a radio access network control unit (27), IP packets in which said data units are encapsulated.

11. Cellular radio communication system (20) including network equipment set up to implement a method according to any of the preceding Claims.

12. Gateway router having a first interface for exchanging first packets along a first IP network (12) and a second interface for exchanging second packets along a second IP network, the gateway router forming an edge router of the first IP network, set up for exchanging first packets with radio terminals (23) in a single hop of the first IP network, each of said first packets exchanged being encapsulated in at least one data unit of a tunnel protocol implemented between said second interface and a switching node (30, 31), said data unit including a tunnel identity and itself being encapsulated in at least a second packet exchanged along the second IP network, the gateway router (32) comprising:
- means for detecting on the first interface first signalling packets carrying RESV messages of the RSVP protocol concerning a first session of the RSVP protocol in the first IP network relative to an application flow of first packets between a radio terminal and a remote unit connected to the first IP network;
- means for associating, in response to the detection of at least some of the first signalling packets, a second RSVP session in the second IP network with a tunnel identity included in the data units in which the first packets of the application flow are encapsulated, the second RSVP session being relative to a flow of second packets in which said data units are encapsulated between said second interface and a switching node;
- means for transmitting second signalling packets in the second IP network for establishing and/or updating parameters of the second session associated with said tunnel identity.

13. Gateway router according to Claim 12, wherein said application flow of first packets is a downlink flow, from a remote unit (11) connected to the first IP network (12) towards the radio terminal (23), and wherein the means for associating the second RSVP session with the tunnel identity include means for including a UDP port number allocated to the application flow in some parameters of the second RSVP session.

14. Gateway router according to Claim 13, wherein the means for transmitting second signalling packets include means for sending an RSVP protocol PATH message on the second IP network to said switching node (30, 31).

15. Gateway router according to Claim 12, wherein said application flow of first packets is an uplink flow, from the radio terminal (23) to the remote unit (11) connected to the first IP network (12), and wherein the means for associating the second RSVP session with the tunnel identity include means for transmitting to the switching node (30, 31), through the intermediary of the second IP network, a control message belonging to a control plane of the tunnel protocol and designating the tunnel identity included in the data units in which the first packets of the application flow are encapsulated.

16. Gateway router according to Claim 15, wherein the control message designating the tunnel identity further contains at least some of the quality-of-service parameters of the first RSVP session.

17. Cellular radio communication system core network switching node for implementing a method according to any of Claims 7 to 9, including a first interface with a radio access network (22) providing links with radio terminals (23) and a second interface for exchanging packets along an IP network with at least a gateway router (32), said packets carrying data units of a tunnel protocol supported by the second interface, each data unit including a tunnel identity and data forming either a control message if the data unit belongs to a control plane of the tunnel protocol, or user data if the data unit belongs to a user plane of the tunnel protocol, the switching node (30, 31) also including means for associating, in response to receiving from a gateway router a tunnel protocol special data unit belonging to the control plane, a session of the RSVP protocol in said IP network with a tunnel identity designated in the control message of said special data unit and transmitting to said gateway router at least one signalling packet in the IP network for setting and/or updating parameters of the session associated with the tunnel identity designated in the control message, said session being relative to a packet flow in which data units are encapsulated, the data units being of the tunnel protocol belonging to the user plane and containing the tunnel identity designated in the control message,
the first interface of the switching node supporting the IP protocol and the user plane of the tunnel protocol for communicating with control units (27) of the radio access network (22), and the switching node (30, 31) further including means for associating, in response to the association with a tunnel identity of an RSVP session relative to a flow of packets in which data units of the tunnel protocol belonging to the user plane and containing a tunnel identity are encapsulated between the switching node and a gateway router (32), another RSVP session with said tunnel identity, for transporting between the switching node and a radio access network control unit (27), IP packets in which said data units are encapsulated.

18. Switching node according to Claim 17, wherein the means for transmitting said signalling packet are set up to include in said packet quality-of-service parameters contained in the control message.

19. Switching node according to Claim 17 or 18, wherein said signalling packet carries an RSVP protocol PATH message.

20. Cellular radio communication system radio network controller for implementing a method according to Claim 10, including a first communication interface with radio terminals (23) and a second interface for exchanging packets along an IP network with at least a switching node (30, 31), said packets carrying user data units of a tunnel protocol supported by the second interface, each user data unit including a tunnel identity, the radio network controller (27) further including means for associating, in response to receiving a control message from a switching node designating a tunnel identity, an RSVP session in said IP network with the tunnel identity designated in the control message and transmitting to said switching node at least one signalling packet in the IP network for setting and/or updating parameters of the RSVP session associated with the tunnel identity designated in the control message, said RSVP session being relative to a packet flow in which are encapsulated data units of the tunnel protocol containing the tunnel identity designated in the control message.

21. Radio network controller according to Claim 20, wherein the means for transmitting said signalling packet are set up to include quality-of-service parameters contained in the control message in said packet.

22. Radio network controller according to Claim 20 or 21, wherein said signalling packet carries an RSVP protocol PATH message.
